# EUROPÄISCHE PATENTSCHRIFT

(11) **EP 3 062 427 B1**
(45) Veröffentlichungstag und Bekanntmachung des Hinweises auf die Patenterteilung: **03.04.2019**
(21) Anmeldenummer: 16155875.4
(22) Anmeldetag: 16.02.2016
(51) Int. Cl.: H02K 41/03, F15B 15/06, H02K 26/00, H02K 7/14, H02K 7/08, F15B 15/20, F15B 15/08

(54) **AKTOR**
ACTUATOR
ACTIONNEUR

(30) Priorität: 20.02.2015 DE 202015100822 U; 20.02.2015 DE 102015203065
(43) Veröffentlichungstag der Anmeldung: 31.08.2016
(73) Patentinhaber: Fertigungsgerätebau A. Steinbach GmbH & Co. KG, 97616 Salz bei Bad Neustadt (DE)
(72) Erfinder: Wolf, Mario, 97616 Salz bei Bad Neustadt (DE); Gabel, Klaus, 97616 Salz bei Bad Neustadt (DE)
(74) Vertreter: Hoffmann Eitle

(56) Entgegenhaltungen:
- EP-A1- 1 813 412
- EP-A2- 1 414 059
- DE-A1- 2 301 443
- DE-A1-102008 037 707

## Beschreibung

### Technisches Gebiet

Die vorliegende Erfindung betrifft einen Aktor zur Verwendung in einem Prüfstand, der beispielsweise bei der Entwicklung und Prüfung von Automobilkomponenten, zum Beispiel der Lenkung, Fahrwerkskomponenten, usw., eingesetzt wird.

### Stand der Technik

Im Stand der Technik sind Prüfeinheiten bekannt, die einen Linearaktor und einen Rotoraktor umfassen. Allerdings handelt es sich hierbei um mechanisch entkoppelte Systeme, die bspw. beim Einsatz für Prüfzwecke zu deutlichen Nachteilen führen. Rein beispielhaft soll an dieser Stelle auf Trägheiten und Umkehrspiele verwiesen werden.

Aus dem Stand der Technik ist das Dokument EP 1 813 412 A1 bekannt, das eine Antriebsanordnung zum Drehen und Verfahren einer Welle zeigt. Die in der EP 1 813 412 A1 gezeigte Vorrichtung kommt bei einer Spritzgussmaschine zum Einsatz. Aktoren zur Verwendung in einem Prüfstand sind in DE 23 01 443 A1 und DE 10 2008 037707 A1 offenbart.

### Gegenstand der Erfindung

Ziel der vorliegenden Erfindung ist es, einen Aktor bereitzustellen, mit dem die oben genannten Probleme behoben werden können, und der bei minimalen Spiel- und Trägheitseinflüssen höhere Regelgüten erreicht.

Der Gegenstand des Anspruchs 1 stellt einen derartigen Aktor bereit. Weitere bevorzugte Ausführungsformen sind in den abhängigen Ansprüchen aufgeführt.

Ein Gedanke der vorliegenden Erfindung ist es, einen hydraulische Betätigungsabschnitt und einen Drehbetätigungsabschnitt mechanisch zu koppeln. Hierzu wird eine Welle vorgesehen, an der sowohl der hydraulische Betätigungsabschnitt als auch der Drehbetätigungsabschnitt angreift, so dass die Welle sowohl axial bewegt als auch rotatorisch betätigt werden kann.

Insbesondere stellt die vorliegende Erfindung einen Aktor zur Verwendung in einem Prüfstand bereit, welcher Aktor aufweist: eine Welle, die sich zumindest abschnittsweise durch einen hydraulischen Betätigungsabschnitt erstreckt, welcher hydraulische Betätigungsabschnitt eingerichtet ist, die Welle axial zu bewegen, wobei sich die Welle ferner zumindest abschnittsweise durch einen Drehbetätigungsabschnitt erstreckt, welcher Drehbetätigungsabschnitt einen Stator aufweist, und ein im Drehbetätigungsabschnitt an der Welle befestigter Läufer vorgesehen ist.

Nachdem sowohl der hydraulische Betätigungsabschnitt als auch der Drehbetätigungsabschnitt direkt an der Welle angreifen, und somit eine hybride Drehhubeinheit darstellen, wird ein gekoppeltes System bereitgestellt. Auf diese Weise können Spiel- und Trägheitseinflüsse minimiert und somit deutlich höhere Regelgüten erreicht werden. Folglich lassen sich Prüfdynamiken mit hohen Anforderungen umsetzen. Rein beispielhaft kann die Welle um 40mm axial bewegt und dabei frei gedreht werden.

Erfindungsgemäß sind im hydraulischen Betätigungsabschnitt zwei hydrostatische Lager vorgesehen, um die Welle zu lagern. Durch Einsatz der hydrostatischen Lager kann eine hochgenaue Verstellbewegung sichergestellt werden. Darüber hinaus weisen hydrostatische Lager gute Dämpfungseigenschaften auf.

Die Wahl eines hydraulischen Antriebs als Linearaktor und eines elektrischen Antriebs, insbesondere Servomotor/ Torquemotor, als Rotoraktor gewährleistet hierbei den Anforderungen entsprechend eine maximale Leistungsdichte und eine äußerst kompakte Bauart.

Erfindungsgemäß wird bevorzugt im Bereich des Drehbetätigungsabschnitts ein Torquemotor als bürstenloser Wechselstrommotor verwendet. Somit stellt der Drehbetätigungsabschnitt einen langsam umlaufenden bzw. momententenstarken Antrieb bereit.

Im Rahmen der Erfindung ist der Drehbetätigungsabschnitt bevorzugt ein sogenannter Innenläufer, bei dem der Rotor an der Welle und der Stator am Gehäuse angebracht ist (bzw. das Gehäuse selbst den Stator darstellt).

Ferner ist es bevorzugt, dass die Welle eine Kolbenstange sowie eine an der Kolbenstange angebrachte, insbesondere angeschraubte, Kolbenstangenverlängerung aufweist. Dieser Aufbau erleichtert die Montage des kompakt ausgebildeten Aktors.

Es ist bevorzugt, dass die Kolbenstange und/oder die Kolbenstangenverlängerung als Hohlwelle ausgebildet sind. Somit wird eine Gewichtsreduzierung erreicht, und es ist möglich, einen Stift eines linearen Messsystems abschnittsweise in die Kolbenstangenverlängerung (oder auch die Kolbenstange) einzuführen, um eine axiale Bewegung der Welle zu erfassen.

In einer Ausführungsform umfasst der hydraulische Betätigungsabschnitt ein insbesondere zylinderförmiges oder eckiges Gehäuse, welches Gehäuse zwei in axialer Richtung beabstandete Hydraulikleitungen aufweist, wobei in jeweils einer der Hydraulikleitungen eine Hydraulikflüssigkeit zugeführt wird, um die Welle axial zu bewegen. Dabei weist die Welle, insbesondere die Kolbenstange, zwischen den Öffnungen der Hydraulikleitungen einen größeren Durchmesser auf. Die wechselweise Betätigung der Hydraulikleitungen erfolgt bevorzugt mittels eines Servoventils.

Dabei ist es bevorzugt, dass jede Hydraulikleitung mit einem Pulsationsdämpfer fluidmäßig in Kontakt steht. Somit kann eine hochgenaue axiale Verstellbewegung sichergestellt werden.

In einer Ausführungsform ist es ferner vorgesehen, dass am Gehäuse eine Ventilbaugruppe mit einem Basiskörper angebracht ist, welche Ventilbaugruppe ein Servoventil umfasst, um wechselweise einen Zustrom einer Hydraulikflüssigkeit zu einer der Hydraulikleitungen bereitzustellen.

Ferner ist es bevorzugt, dass der Läufer im Bereich des Drehbetätigungsabschnitts beabstandet zur Welle vorgesehen ist. In einer konkreten Ausführungsform ist hierbei ein Abstandshalter an der Kolbenstange vorgesehen. Durch den Abstandshalter und einen Vorsprung der Kolbenstangenverlängerung, die einen größeren Durchmesser als die Kolbenstange aufweist, wird ein Träger gehalten, um den der Läufer gewickelt ist.

In einer weiteren Ausgestaltung der Erfindung erstreckt sich der Läufer in axialer Richtung entlang der Welle derart, dass sich der Läufer an Endpunkten der axialen Bewegung der Welle innerhalb des Stators befindet. Somit wird stets eine volle elektrische Überdeckung gewährleistet, so dass stets die gesamte Motorleistung (Drehzahl und Drehmoment) zur Verfügung steht.

Außerdem kann der Stator an einem Innenumfang eines zylinderförmigen oder eckigen Gehäuses des Drehbetätigungsabschnitts vorgesehen sein. Somit wird eine kompakte Bauform mit einer geringen Anzahl an Komponenten bereitgestellt.

Der erfindungsgemäße Aktor kann ferner ein Messsystem aufweisen, wobei das Messsystem ein rotatorisches Messsystem zur Erfassung einer Drehbewegung der Welle sowie ein lineares Messsystem zur Erfassung einer axialen Bewegung der Welle aufweist. Die vom Messsystem ermittelten Daten können zur Ansteuerung den hydraulischen Betätigungsabschnitt für eine axiale Bewegung der Welle sowie den Drehbetätigungsabschnitt für eine Drehbewegung der Welle eingesetzt werden.

### Kurze Beschreibung der Zeichnungen

- Figur 1: ist eine perspektivische Sicht einer bevorzugten Ausführungsform der vorliegenden Erfindung.
- Figur 2: ist eine Schnittansicht, die den Aktor mit eingefahrener Kolbenstange zeigt.
- Figur 3: ist eine Schnittansicht, die den Aktor mit ausgefahrener Kolbenstange zeigt.

### Detaillierte Beschreibung der bevorzugten Ausführungsformen

Nachfolgend wird anhand der beigefügten Figuren eine bevorzugte Ausführungsform der vorliegenden Erfindung beschrieben. Weitere in diesem Zusammenhang genannte Modifikationen bestimmter Elemente oder Baugruppen können jeweils einzeln miteinander kombiniert werden, um neue Ausführungsformen auszubilden.

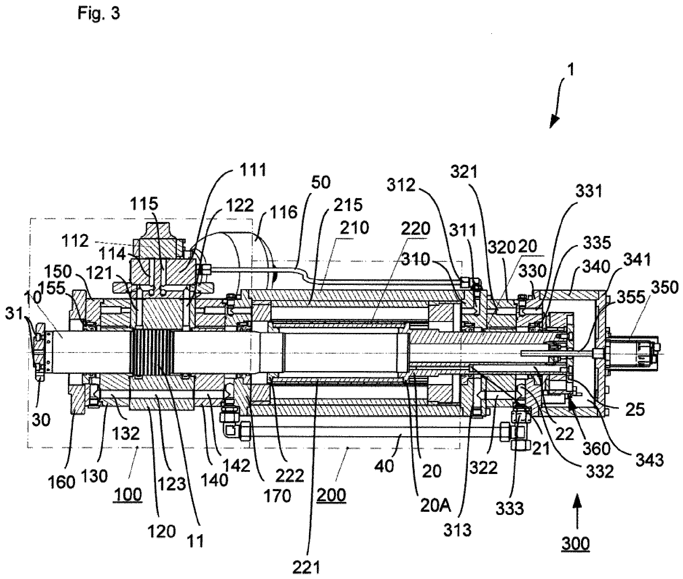

Der Aktor 1 umfasst, wie in Figur 3 angedeutet, mehrere Abschnitte, nämlich einen Linearaktor 100 (hydraulischen Betätigungsabschnitt), einen Rotoraktor 200 (Drehbetätigungsabschnitt) sowie ein Messsystem 300. Durch diese Abschnitte erstreckt sich zumindest teilweise eine Kolbenstange 10 bzw. eine fest mit der Kolbenstange 10 verbundene Kolbenstangenverlängerung 20. Die Kolbenstange 10 sowie die Kolbenstangenverlängerung werden auch als Welle bezeichnet.

Die Kolbenstange 10 ist bevorzugt als Hohlwelle ausgebildet. Obwohl die Kolbenstange 10 in der vorliegenden Ausführungsform einstückig ausgebildet ist, kann diese auch aus mehreren Einzelelementen zusammengesetzt sein.

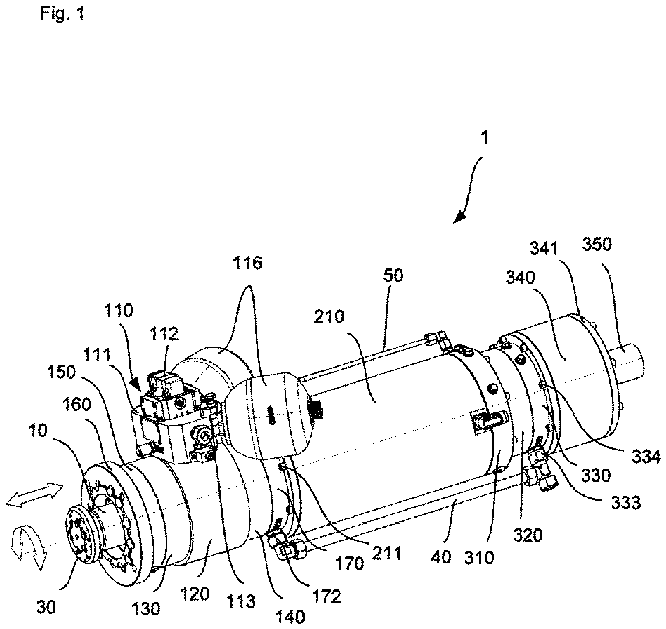

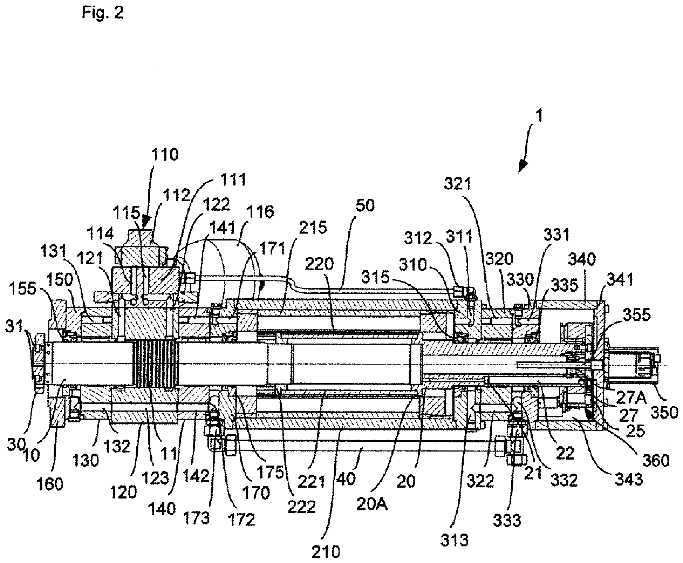

An einem Endabschnitt des Aktors 1 ragt die Kolbenstange 10 - zumindest im ausgefahrenen Zustand der Kolbenstange - hervor. An diesem Ende der Kolbenstange 10 ist eine Befestigungsplatte 30 mittels Schrauben 31 montiert. Die Befestigungsplatte 30 kann mit einem nicht dargestellten Prüfgegenstand verbunden werden, der durch den Aktor 1 mittels einer linearen und/oder rotatorischen Bewegung der Kolbenstange 10 entsprechenden Bewegungen, Kräften und/oder Momenten in diesen Richtungen ausgesetzt werden soll. Die mit der Kolbenstange 10 durchführbaren Bewegungen sind in Figur 1 mittels entsprechenden Pfeilen gekennzeichnet, und die Linearbewegung der Kolbenstange 10 ist ferner aus einer Zusammenschau der Figuren 2 und 3 ersichtlich. Rein beispielhaft kann die Kolbenstange 10 um 40mm bewegt und dabei frei gedreht werden.

Der Linearaktor 100 (hydraulischer hydrostatischer Linearaktors bzw. Servozylinder) umfasst eine Ventilbaugruppe 110. Die Ventilbaugruppe 110 weist eine Basis 111 sowie ein an der Basis 111 montiertes Servoventil 112 auf. Ferner sind an der Basis 111 Anschlüsse vorgesehen (lediglich ein Anschluss 113 ist in Figur 1 dargestellt), über die jeweils eine Hydraulikflüssigkeit zugeführt oder abgeführt werden kann. Dabei gelangt die Hydraulikflüssigkeit in eine erste Leitung 114 bzw. eine zweite Leitung 115, die sich durch die Basis 111 der Ventilbaugruppe 110 erstrecken. Mit den Leitungen 114, 115 ist jeweils ein an der Basis 111 montierter Pulsationsdämpfer 116 verbunden, der Pulsationen der Hydraulikflüssigkeit innerhalb der jeweiligen Leitung 114, 115 dämpft. Dies ermöglicht eine hochgenaue Betätigung der Kolbenstange 10.

Um eine kompakte Bauform des Aktors 1 bereitzustellen, sind die Pulsationsdämpfer 116 an einer gleichen Seite der Basis 111 befestigt, und erstrecken sich hiervon in - zu dieser Seite der Basis 111 - schrägen Richtungen.

Die Ventilbaugruppe 110 ist an einem zylinderförmig ausgebildeten Gehäuse 120 montiert. Innerhalb des Gehäuses 120 sind Leitungen 121, 122 vorgesehen, die in radialer Richtung verlaufen und mit der ersten Leitung 114 bzw. der zweiten Leitung 115 der Ventilbaugruppe 110 verbunden sind.

Somit kann jeweils eine Hydraulikflüssigkeit zur Kolbenstange 10 geleitet werden, um eine lineare Bewegung der Kolbenstange 10 herbeizuführen. Hierzu weist die Kolbenstange 10 im Bereich zwischen den Öffnungen der Leitungen 121 und 122 einen vergrößerten Außendurchmesser auf, der mit gleichmäßig beabstandeten Umfangsnuten versehen ist.

Beidseitig des Gehäuses 120 ist jeweils ein hydrostatisches Lager 130, 140 zur Abstützung der Kolbenstange 10 vorgesehen. Die hydrostatischen Lager 130, 140 weisen jeweils einen in axialer Richtung verlaufenden Kanal 132 bzw. 142 auf, die mittels eines im Gehäuse 120 vorgesehenen Kanal 123 miteinander verbunden sind. Die Kanäle 132,123,142 stellen ein Leckölsystem dar, und führen das Lecköl nach den hydrostatischen Lagern zusammen und zurück.

Seitlich des hydrostatischen Lagers 130 ist ein Befestigungsring 150 vorgesehen, der einen Dichtungsring 155 mit Dichtungselementen aufnimmt, welche Dichtungselemente mit der Kolbenstange 10 in Kontakt stehen. Anschließend an den Befestigungsring 150 ist eine Abdeckplatte 160 angeordnet, die mittels mehrerer Schrauben, die durch Bohrungen im Befestigungsring 150 und Bohrungen 131 im hydrostatischen Lager 130 geführt sind, mit dem Gehäuse 120 verschraubt ist. Auf diese Weise werden die Abdeckplatte 160, der Befestigungsring 150 sowie das hydrostatische Lager 140 gegen das Gehäuse 120 gedrückt und somit fixiert.

Seitlich des hydrostatischen Lagers 140 ist an der dem Gehäuse 120 abgewandten Seite ein Zwischenring 170 vorgesehen. Der Zwischenring 170 ist mittels mehrerer Schrauben, die durch Bohrungen 141 des hydrostatischen Lagers 140 gelangen, mit dem Gehäuse 120 verbunden. Auf diese Weise werden der Zwischenring 170 und das hydrostatische Lager 140 gegen das Gehäuse 120 gedrückt und somit fixiert.

Der Zwischenring 170 weist ferner einen in Richtung des Außenumfangs des Zwischenrings 170 verlaufenden Kanal 172 sowie einen entsprechenden Anschluss 173 auf, welcher Kanal 172 mit dem Kanal 142 des hydrostatischen Lagers 140 in Verbindung steht. Am Anschluss 173 ist eine Verbindungsleitung 40 angeschlossen, über die das Lecköl nach den hydrostatischen Lagern zusammen und zurückgeführt wird.

Innerhalb des Zwischenrings 170 ist ferner ein Dichtungsring 175 mittels Schrauben angebracht, dessen Dichtungselemente mit der Kolbenstange 10 in Kontakt stehen. Somit wird der Linearaktor 100 mit dem Dichtungsring 155 und dem Dichtungsring 155 geschlossen, wobei die Dichtungselemente dieser Dichtungsringe eine axiale Beweglichkeit der Kolbenstange 10 gestatten.

Nachfolgend wird der Rotoraktor 200 sowie dessen Aufbau näher erläutert.

Der Rotoraktor 200 umfasst ein Gehäuse 210, das gleichzeitig als Statorträger dient, und an seiner Innenseite einen Stator 215 aufnimmt. Das Gehäuse 210 ist mittels mehrerer Schrauben 211 mit dem Zwischenring 170 verbunden.

Mittig im Gehäuse 210 bzw. mittig zum Stator 215 verläuft abschnittsweise die Kolbenstange 10, die innerhalb des Gehäuses 210 endet. Am Ende der Kolbenstange 10 ist die Kolbenstangenverlängerung 20 mittels Schrauben 21 befestigt. Hierzu sind in der als Hohlwelle ausgebildeten Kolbenstangenverlängerung 20 Öffnungen 22 vorbereitet, um die Schrauben 21 in axialer Richtung in die Kolbenstangenverlängerung 20 einzuführen und mit der ebenfalls als Hohlwelle ausgebildeten Kolbenstange 10 zu verschrauben.

Umlaufend um die Kolbenstange 10 ist ein Motorläufer 220 vorgesehen, welcher Motorläufer 220 in Zusammenwirkung mit dem Motorstator 110 eine Drehbewegung der Kolbenstange 10 initiiert. Der Motorläufer 220 ist dabei auf einem Träger 221 vorgesehen, der an einem Vorsprung 20A der Kolbenstangenverlängerung 20 und an einem Abstandshalter 222 fixiert ist, welcher Abstandshalter 222 auf die Kolbenstange aufgepresst wurde. Somit wird der Motorläufer beabstandet zum Außenumfang der Kolbenstange 10 gehalten.

An der dem Zwischenring 170 gegenüberliegenden Seite des Gehäuses 210 ist ein Ring 310 mit dem Gehäuse 210 verschraubt, welcher Ring 310 ferner einen Dichtungsring 315 aufnimmt, dessen Dichtungselemente mit der Kolbenstangenverlängerung 20 in Kontakt stehen. Der Ring 310 ist über einen Kanal 311, in dem ein Luftfilterelement aufgenommen ist, mit einer Hydraulikleitung 50 versehen, die mit einem Anschluss 312 verbunden ist. Am Anschluss 312 ist die Hydraulikleitung 50 angebracht, die mit der Ventilbaugruppe 110 in Verbindung steht und außerhalb des Gehäuses 210 und beabstandet hierzu verläuft.

Benachbart zum Ring 310 ist ein weiteres hydrostatisches Lager 320 vorgesehen, welches die Kolbenstangenverlängerung 20 abgestützt. Innerhalb des hydrostatischen Lagers 320 verläuft in axialer Richtung eine Bohrung 321. Ferner weist das hydrostatische Lager 320 einen in axialer Richtung ausgerichteten Kanal 322 auf, über den das Lecköl nach den hydrostatischen Lager 320 zusammen und zurückgeführt wird. Die Kanäle 313 und 322, die miteinander in Verbindung stehen, sind über einen weiteren Kanal 332 im nachfolgenden beschriebenen Anschlussstück 330 mit einem Anschluss 333 verbunden. Das Anschlussstück 330 ist mit der Verbindungsleitung 40 fluidmäßig in Kontakt, so dass mit den bereits zu vor beschriebenen hydrostatischen Lagern 130, 140 des Linearaktors 100 ein gemeinsames Leckölsystem ausgebildet wird.

Benachbart zum hydrostatischen Lager 320 ist ein Anschlussstück 330 vorgesehen, das Durchgangsbohrungen 331 aufweist, in welche Durchgangsbohrungen 331 Schrauben eingeführt wird. Die Schrauben dringen entsprechend durch Bohrungen 331 des Anschlussstücks 330 sowie Bohrungen 321 des hydrostatischen Lagers 320, und sind in entsprechende Gewinde des Rings 310 eingeschraubt. Auf diese Weise wird das Anschlussstück 330 sowie das hydrostatische Lager 320 mit dem Ring 310 verspannt.

Innerhalb des Anschlussstücks 330 ist ein Dichtungsring 335 vorgesehen, der mittels Schrauben mit dem Anschlussstück 330 verbunden ist, welcher Dichtungsring 335 Dichtungselemente aufweist, die mit der Kolbenstangenverlängerung 20 in Kontakt stehen.

Am Anschlussstück 330 ist ferner an der dem hydrostatischen Lager gegenüberliegenden Seite mittels Schrauben 334 ein Zylindergehäuse 340 befestigt, welches Zylindergehäuse 340 durch eine mittels Schrauben 342 angebrachten Abdeckung 341 verschlossen ist. Innerhalb des Zylindergehäuses 340 ist ein Hohlraum 343 ausgebildet. In diesen Hohlraum 343 dringt die Kolbenstangenverlängerung 20 ein.

An einem Endabschnitt der Kolbenstangenverlängerung 20 ist ein rotatorisches Messsystem 360 angebracht, mit dem eine Drehbewegung der Kolbenstangenverlängerung 20, und somit der Kolbenstange 10, erfasst werden kann.

Insbesondere ist am Ende der Kolbenstangenverlängerung 20 eine Abdeckplatte 25 montiert, welche Abdeckplatte 25 mittig eine Durchgangsöffnung 25A aufweist. Am Endabschnitt der Kolbenstangenverlängerung 20 ist eine durch die Abdeckplatte 25 verdeckte Vertiefung 26 ausgebildet, die gegenüber dem Innendurchmesser der als hohle Welle ausgebildeten Kolbenstangenverlängerung 20 einen größeren Durchmesser aufweist. Auf dem derart ausgebildeten Absatz ist ein Messelement 27 montiert, welches Messelement 27 eine Durchgangsöffnung 27A aufweist.

An der Abdeckung 341 ist mittig ein lineares Messsystem 350 befestigt, das einen Stift 355 aufweist, der durch die Abdeckung 341 dringt und sich ferner durch die Durchgangsöffnung 25A der Abdeckplatte 25 sowie die Durchgangsöffnung 27A des Messelements 27 erstreckt.

Somit kann durch das lineare Messsystem 350 eine lineare Relativbewegung zwischen dem an der Kolbenstangenverlängerung 20 montierten Messelement 27 und dem Stift 355 erfasst werden.

Auch wenn im Rahmen der vorliegend beschriebenen Ausführungsform der Aktor 1 einen Linearaktor 100 (hydraulischen Betätigungsabschnitt), einen Rotoraktor 200 (Drehbetätigungsabschnitt) sowie ein Messsystem 300 in der genannten Reihenfolge aufweist, und die Kolbenstange aus dem Linearaktor hervorragt, kann es gemäß weiteren Modifikationen vorgesehen sein, den Rotoraktor, den Linearaktor und das Messsystem in dieser Reihenfolge vorzusehen.

Auch wenn im Rahmen der vorliegend beschriebenen Ausführungsform der Linearaktor 100 (hydraulischen Betätigungsabschnitt), der Rotoraktor 200 (Drehbetätigungsabschnitt) sowie das Messsystem 300 in axialer Richtung nacheinander vorgesehen sind, kann das Messsystem beispielsweise auch seitlich angebracht sein.

Auch wenn der beschriebene Aktor 1 für Prüfzwecke eingesetzt wird, kann es gemäß einer weiteren Ausführungsform, die nicht unter dem Schutzumfang fällt, vorgesehen sein, den Aktor zum Bewegen von Bauteilen oder Elementen in einer Werkzeugmaschine oder einer anderen Maschine einzusetzen.

## Patentansprüche

1. Aktor (1) zur Verwendung in einem Prüfstand, aufweisend:
eine Welle (10, 20), die sich zumindest abschnittsweise durch einen hydraulischen Betätigungsabschnitt (100) erstreckt, welcher hydraulische Betätigungsabschnitt (100) eingerichtet ist, die Welle (10, 20) axial zu bewegen,
wobei sich die Welle (10, 20) ferner zumindest abschnittsweise durch einen Drehbetätigungsabschnitt (200) erstreckt, welcher Drehbetätigungsabschnitt (200) einen Stator (215) aufweist, wobei im Drehbetätigungsabschnitt (200) ein an der Welle (10, 20) befestigter Läufer (220) vorgesehen ist, **gekennzeichnet dadurch, dass** im hydraulischen Betätigungsabschnitt (100) zwei hydrostatische Lager (130, 140) vorgesehen sind, um die Welle (10, 20) zu lagern.

2. Aktor (1) gemäß, Anspruch 1, **dadurch gekennzeichnet, dass** die Welle (10, 20) eine Kolbenstange (10) sowie eine an der Kolbenstange (10) angebrachte, insbesondere angeschraubte, Kolbenstangenverlängerung (20) aufweist.

3. Aktor (1) gemäß Anspruch 2, **dadurch gekennzeichnet, dass** die Kolbenstange (10) und/oder die Kolbenstangenverlängerung (20) als Hohlwelle ausgebildet sind.

4. Aktor (1) gemäß einem der vorangegangenen Ansprüche, **dadurch gekennzeichnet, dass** der hydraulische Betätigungsabschnitt (100) ein Gehäuse (120) umfasst, welches Gehäuse (120) zwei in axialer Richtung beabstandete Hydraulikleitungen (121, 122) aufweist, wobei in jeweils einer der Hydraulikleitungen (121, 122) eine Hydraulikflüssigkeit zugeführt wird, um die Welle (10, 20) axial zu bewegen.

5. Aktor (1) gemäß Anspruch 4, **dadurch gekennzeichnet, dass** jede Hydraulikleitung (121, 122) mit einem Pulsationsdämpfer (116) fluidmäßig in Kontakt steht.

6. Aktor (1) gemäß Anspruch 4 oder 5, **dadurch gekennzeichnet, dass** am Gehäuse (120) eine Ventilbaugruppe (110) mit einem Basiskörper (111) angebracht ist, welche Ventilbaugruppe (110) ein Servoventil umfasst, um wechselweise einen Zustrom einer Hydraulikflüssigkeit zu einer der Hydraulikleitungen (121, 122) bereitzustellen.

7. Aktor (1) gemäß einem der vorangegangenen Ansprüche, **dadurch gekennzeichnet, dass** der Läufer (220) beabstandet zur Welle (10, 20) vorgesehen ist.

8. Aktor (1) gemäß einem der vorangegangenen Ansprüche, **dadurch gekennzeichnet, dass** sich der Läufer (220) in axialer Richtung entlang der Welle (10, 20) derart erstreckt, dass sich der Läufer an Endpunkten der axialen Bewegung der Welle (10, 20) innerhalb des Stators (220) befindet.

9. Aktor (1) gemäß einem der vorangegangenen Ansprüche, **dadurch gekennzeichnet, dass** der Stator (215) des Drehbetätigungsabschnitts (200) an einem Innenumfang eines bevorzugt zylinderförmigen oder eckigen Gehäuses (210) des Drehbetätigungsabschnitts (200) vorgesehen ist.

10. Aktor (1) gemäß einem der vorangegangenen Ansprüche, **dadurch gekennzeichnet, dass** die Welle (10, 20) benachbart zur hydraulischen Betätigungseinheit (100) vorsteht, wobei am vorstehenden Endabschnitt der Welle (10, 20) eine Befestigungsplatte (30) zur Anbringung eines Prüfkörpers montiert ist.

11. Aktor (1) gemäß einem der vorangegangenen Ansprüche, **dadurch gekennzeichnet, dass** der Aktor ferner ein Messsystem (300) aufweist, wobei das Messsystem (300) ein rotatorisches Messsystem (360) zur Erfassung einer Drehbewegung der Welle (10, 20) sowie ein lineares Messsystem (350) zur Erfassung einer axialen Bewegung der Welle (10, 20) aufweist.

12. Aktor (1) gemäß einem der vorangegangenen Ansprüche, **dadurch gekennzeichnet, dass** die Welle eine Kolbenstange (10) aufweist, die im Bereich (11) zwischen Öffnungen von Hydraulikleitungen (121, 122) einen vergrößerten Außendurchmesser aufweist, der bevorzugt mit insbesondere gleichmäßig beabstandeten Umfangsnuten versehen ist.

13. Aktor (1) gemäß einem der vorangegangenen Ansprüche, **dadurch gekennzeichnet, dass** der Drehbetätigungsabschnitts (200) als bürstenloser Wechselstrommotor ausgebildet ist.

## Claims

1. Actuator (1) for use in a test bench, having:
a shaft (10, 20), which extends at least sectionally through a hydraulic actuating portion (100), which hydraulic actuating portion (100) is configured to move the shaft (10, 20) axially, wherein the shaft (10, 20) furthermore extends at least sectionally through a rotary actuator portion (200), which rotary actuator portion (200) has a stator (215), wherein in the rotary actuator portion (200) a rotor (220) is provided, which is fastened to the shaft (10, 20), **characterised in that**
in the hydraulic actuating portion (100) two hydrostatic bearings (130, 140) are provided, in order to support the shaft (10, 20).

2. Actuator (1) according to claim 1, **characterised in that** the shaft (10, 20) has a piston rod (10) and a piston rod extension (20) mounted on, in particular screwed onto, the piston rod (10).

3. Actuator (1) according to claim 2, **characterised in that** the piston rod (10) and/or the piston rod extension (20) are formed as a hollow shaft.

4. Actuator (1) according to any of the preceding claims, **characterised in that** the hydraulic actuating portion (100) comprises a housing (120), which housing (120) has two hydraulic lines (121, 122) spaced apart in axial direction, wherein a hydraulic fluid is supplied in one of the hydraulic lines (121, 122) respectively, in order to move the shaft (10, 20) axially.

5. Actuator (1) according to claim 4, **characterised in that** each hydraulic line (121, 122) is in fluidic contact with a pulsation damper (116).

6. Actuator (1) according to claim 4 or 5, **characterised in that** on the housing (120) a valve assembly (110) having a basic body (111) is mounted, which valve assembly (110) comprises a servo valve, in order to provide alternately an influx of a hydraulic fluid to one of the hydraulic lines (121, 122).

7. Actuator (1) according to any of the preceding claims, **characterised in that** the rotor (220) is provided spaced apart from the shaft (10, 20).

8. Actuator (1) according to any of the preceding claims, **characterised in that** the rotor (220) extends in axial direction along the shaft (10, 20) such that the rotor is located at the end points of the axial movement of the shaft (10, 20) within the stator (220).

9. Actuator (1) according to any of the preceding claims, **characterised in that** the stator (215) of the rotary actuator portion (200) is provided on an inner circumference of a preferably cylindrical or angular housing (210) of the rotary actuator portion (200).

10. Actuator (1) according to any of the preceding claims, **characterised in that** the shaft (10, 20) protrudes adjacent to the hydraulic actuating portion (100), wherein at the protruding end section of the shaft (10, 20) a fastening plate (30) is mounted for the attachment of a testing body.

11. Actuator (1) according to any of the preceding claims, **characterised in that** the actuator in addition has a measuring system (300), wherein the measuring system (300) has a rotatory measuring system (360) for detecting a rotational movement of the shaft (10, 20) and a linear measuring system (350) for detecting an axial movement of the shaft (10, 20).

12. Actuator (1) according to any of the preceding claims, **characterised in that** the shaft has a piston rod (10) which in the portion (11) between openings of hydraulic lines (121, 122) has an enlarged outer diameter, which is preferably equipped in particular with evenly spaced circumferential grooves.

13. Actuator (1) according to any of the preceding claims, **characterised in that** the rotary actuator portion (200) is designed as a brushless AC motor.

## Revendications

1. Actionneur (1) pour utilisation dans un banc d'essai, présentant :
un arbre (10, 20) qui s'étend au moins par sections à travers une section de commande hydraulique (100), laquelle section de commande hydraulique (100) est aménagée afin de déplacer l'arbre (10, 20) axialement,
dans lequel l'arbre (10, 20) s'étend en outre au moins par sections à travers une section de commande de rotation (200), laquelle section de commande de rotation (200) présente un stator (215), dans lequel un rotor (220) fixé sur l'arbre (10, 20) est disposé dans la section de commande de rotation (200), **caractérisé en ce que**
deux paliers hydrostatiques (130, 140) sont disposés dans la section de commande hydraulique (100) afin de loger l'arbre (10, 20).

2. Actionneur (1) selon la revendication 1, **caractérisé en ce que** l'arbre (10, 20) présente une tige de piston (10) ainsi qu'un prolongement de tige de piston (20) monté, en particulier vissé, sur la tige de piston (10).

3. Actionneur (1) selon la revendication 2, **caractérisé en ce que** la tige de piston (10) et/ou le prolongement de tige de piston (20) est ou sont conformés en arbre creux.

4. Actionneur (1) selon l'une quelconque des revendications précédentes, **caractérisé en ce que** la section de commande hydraulique (100) comporte un boîtier (120), lequel boîtier (120) présente deux conduites hydrauliques (121, 122) espacées dans la direction axiale, dans lequel un liquide hydraulique est amené dans respectivement l'une des conduites hydrauliques (121, 122) afin de déplacer axialement l'arbre (10, 20).

5. Actionneur (1) selon la revendication 4, **caractérisé en ce que** chaque conduite hydraulique (121, 122) est en contact fluidique avec un amortisseur de pulsations (116).

6. Actionneur (1) selon la revendication 4 ou 5, **caractérisé en ce que** sur le boîtier (120) un ensemble de valve (110) est monté avec un corps de base (111), lequel ensemble de valve (110) comporte une servovalve afin de mettre à disposition alternativement un afflux d'un liquide hydraulique vers une des conduites hydrauliques (121, 122).

7. Actionneur (1) selon l'une quelconque des revendications précédentes, **caractérisé en ce que** le rotor (220) est disposé à distance de l'arbre (10, 20).

8. Actionneur (1) selon l'une quelconque des revendications précédentes, **caractérisé en ce que** le rotor (220) s'étend dans la direction axiale le long de l'arbre (10, 20) de telle manière que le rotor se trouve en des points d'extrémité du mouvement axial de l'arbre (10, 20) dans le stator (220).

9. Actionneur (1) selon l'une quelconque des revendications précédentes, **caractérisé en ce que** le stator (215) de la section de commande de rotation (200) est disposé sur une périphérie intérieure d'un boîtier (210) de préférence cylindrique ou polygonal de la section de commande de rotation (200).

10. Actionneur (1) selon l'une quelconque des revendications précédentes, **caractérisé en ce que** l'arbre (10, 20) dépasse au voisinage de l'unité de commande hydraulique (100), dans lequel est montée sur la section d'extrémité saillante de l'arbre (10, 20) une plaque de fixation (30) est montée pour le montage d'un échantillon.

11. Actionneur (1) selon l'une quelconque des revendications précédentes, **caractérisé en ce que** l'actionneur présente de plus un système de mesure (300), dans lequel le système de mesure (300) présente un système de mesure rotatif (360) pour la détection d'un mouvement rotatif de l'arbre (10, 20) ainsi qu'un système de mesure linéaire (350) pour la détection d'un mouvement axial de l'arbre (10, 20).

12. Actionneur (1) selon l'une quelconque des revendications précédentes, **caractérisé en ce que** l'arbre présente une tige de piston (10) qui présente dans la zone (11) entre des ouvertures de conduites hydrauliques (121, 122) un diamètre extérieur agrandi qui est pourvu de préférence de rainures périphériques en particulier espacées uniformément.

13. Actionneur (1) selon l'une quelconque des revendications précédentes, **caractérisé en ce que** la section de commande de rotation (200) se présente sous la forme d'un moteur à courant alternatif sans balai.
